# EUROPÄISCHE PATENTSCHRIFT

(11) **EP 0 624 839 B1**
(45) Veröffentlichungstag und Bekanntmachung des Hinweises auf die Patenterteilung: **10.11.1999**
(21) Anmeldenummer: 94106765.4
(22) Anmeldetag: 29.04.1994
(51) Int. Cl.: G06F 7/58

(54) **Verfahren und Schaltungsanordnung zum Erzeugen einer Pseudozufallsfolge sowie deren Verwendung**
Method and circuitry for producing a pseudo random sequence and its use
Procédé et dispositif pour obtenir une séquence pseudo-aléatoire ainsi que son utilisation

(30) Priorität: 10.05.1993 DE 4315544
(43) Veröffentlichungstag der Anmeldung: 17.11.1994
(73) Patentinhaber: SIEMENS AKTIENGESELLSCHAFT, 80333 München (DE)
(72) Erfinder: Hess, Erwin, Dr. rer. nat., D-85521 Ottobrunn (DE); Schrenk, Hartmut, Dr. rer. nat., D-85540 Haar (DE)

(56) Entgegenhaltungen:
- GB-A- 2 113 879
- MATHEMATICS AND COMPUTERS IN SIMULATION, Bd.XXII, Nr.1, März 1980, AMSTERDAM NL Seiten 36 - 48 D. MARITSAS ET AL. 'DEVELOPMENT AND TESTING OF A HIGH PRECISION DIGITAL GAUSSIAN GENERATOR FOR COMPUTERS'
- IEEE JOURNAL OF SOLID-STATE CIRCUITS., Bd.26, Nr.7, Juli 1991, NEW YORK US Seiten 1056 - 1062, XP000237048 A. STRÖLE ET AL. 'TESTCHIP: A Chip for Weighted Random Pattern Generation, Evaluation, and Test Control'

## Beschreibung

Die Erfindung betrifft ein Verfahren und eine Schaltungsanordnung zum Erzeugen einer Pseudozufallsfolge von Bitdaten unter Verwendung einer rückgekoppelten Schieberegistereinrichtung wobei Ausgangssignale der Schieberegistereinrichtung einer nichtlinearen logischen Funktion als Eingangsvariable zugeführt werden, und wobei abhängig vom logischen Ausgangssignal der nichtlinearen logischen Funktion eine Ausgabe der Bitdaten durchgeführt wird.

Ein solches Verfahren und eine solche Schaltungsanordnung sind aus der GB 2 113 879 A bekannt. Dort steuert das logische Ausgangssignal der nichtlinearen logischen Funktion direkt die Ausgabe der Bitdaten. Hierdurch erfolgt eine ziemlich regelmäßige Ausgabe von Bitdaten.

Pseudozufallsfolgen bzw. pseudozufällige Binärfolgen werden vielfach zur Untersuchung von analogen und digitalen Systemen eingesetzt. Darüber hinaus spielen Pseudozufallsfolgen eine bedeutende Rolle bei der Verschlüsselung von Daten.

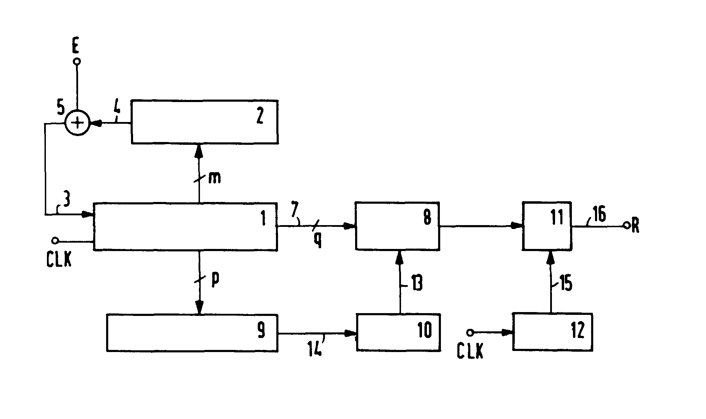

Es sind zahlreiche Schaltungsanordnungen bekannt, solche Pseudozufallsfolgen von Bitdaten zu erzeugen. In dem Buch Tietze, Schenk "Halbeiter-Schaltungstechnik", 5. Auflage sind auf den Seiten 509 bis 512 Schaltungsanordnungen beschrieben, um solche Pseudozufallsfolgen zu erzeugen. Zur Erzeugung von Pseudozufallsfolgen verwendet man üblicherweise Schieberegister, die in bestimmter Weise rückgekoppelt sind. Die Rückkopplung wird dabei aus Exklusiv-ODER-Schaltungen zusammengesetzt. Die größte nicht periodische Bitfolge, die ein Schieberegister mit n Stufen erzeugen kann, ist N = 2ⁿ-1 Bit lang. So kann mit einem vierstufigen Schieberegister beispielsweise eine Pseudozufallsfolge mit einer maximalen Periodenlänge von 15 Bit erzeugt werden. Eine dafür geeignete Schaltung ist in Abbildung 20.23 der genannten Literaturstelle zu sehen.

Beim Verschlüsseln von Daten wird dagegen die rückgekoppelte Schieberegistereinrichtung mit einer Schlüsselinformation, d.h. ein geheimes Datenwort, beaufschlagt. Mit diesem Datenwort wird festgelegt, an welcher Stelle der Pseudozufallsfolge am Ausgang der rückgekoppelten Schieberegistereinrichtung der Datenstrom der Pseudozufallsfolge beginnt.

Befindet sich beispielsweise in einer tragbaren Datenträgeranordnung, wie z.B. einer Chipkarte, und in einer mit dieser zusammenarbeitenden Datenein-/ausgabeeinrichtung jeweils ein gleiches rückgekoppeltes Schieberegister, und ist der gleiche Schlüssel auf beiden Seiten bekannt, so können die von der einen Datenträgeranordnung zur Datenein/ausgabeeinrichtung verschlüsselt gesendeten Daten wieder entschlüsselt bzw. ein zwischen beiden Seiten ausgetauschter Datenstrom gleichermaßen verschlüsselt und die verschlüsselten Daten verglichen werden. Damit ist unter anderem ein Echheitsnachweis der Chipkarte möglich und ein gewisser Schutz vor Fälschungen bzw. Mißbrauch sichergestellt.

Bisherige Verfahren und Konzepte zur Sicherung solcher Datenträgeranordnung verwenden anstelle einer strengen Echtheitsprüfung zur Ausschaltung von Fälschungen und Mißbrauch die Überprüfung eines durch Nachbauten oder Emulationen nur sehr schwer realisierbaren charakteristischen Merkmals. Bekannt ist darüber hinaus auch die Überprüfung der Gültigkeit der gespeicherten Daten über den Zusatz eines mit dem oben bereits erwähnten geheimen Schlüssel in einer Datenträgeranordnung erzeugten Codes für einen Echtheitsnachweis des Dateninhalts.

Problematisch ist bei diesem bekannten Verfahren, daß die Kontrollsignale abgehört bzw. am Ein/Ausgang der Datenträgeranordnung, beispielsweise der Chipkarte, abgegriffen werden können, wodurch ein Wiedereinspielen der Kontrollinformation zur Fälschungszwecken möglich ist.

Bei elektronischen Schaltungen mit Mikroprozessorarchitektur wird dieser Nachteil durch Einsatz eines kryptografischen Authentifikations- oder Identifikationsvorganges nach dem Prinzip der herausfordernden Frage und dazu passenden Antwort (Challenge und Response-Prinzip) bzw. mit Zero-Knowledge-Protokoll ausgeschaltet.

Dieses Challenge-Response-Prinzip sieht beispielsweise bei einer Chipkarte und einer Datenein-/ausgabeeinrichtung zum Lesen dieser Chipkarte vor, daß zunächst die Datenein/ausgabeeinrichtung Daten "Challenge" generiert und diese zur Chipkarte sendet. Dort dient diese "Challenge" zur Berechnung einer sogenannten "Response". Diese "Response" wird mittels eines Algorithmusses zum Echtheitsnachweis berechnet und hängt zweckmäßigerweise von weiteren Daten, dem geheimen Kartenschlüssel und z.B. einer weiteren Größe, wie einem internen Zählerstand, ab. Die von der Chipkarte zur Datenein-/ausgabeeinrichtung gesendete "Response" wird in der Datenein-/ausgabeeinrichtung mit dort vorliegenden Daten verglichen. Diese dort vorliegenden Daten werden mit dem gleichen Algorithmus, dem gleichen geheimen Kartenschlüssel, der Challenge und der Zusatzinformation berechnet. Stimmt die Response mit dieser Berechnung überein, so ist die Chipkarte als gültig erkannt. Andernfalls erfolgt ein Abbruch der Datenverbindung zwischen Chipkarte und Datenein-/ausgabeinrichtung. Die eingangs erwähnte rückgekoppelte Schieberegistereinrichtung wird bei diesen bekannten Systemen dazu verwendet, den geheimzuhaltenden Kartenschlüssel in eine längere Pseudozufallsfolge, eine sogenannte Schlüsselstromfolge, zu transformieren. Bei Vorgabe beliebiger Teile der Schlüsselstromfolge muß es einem Angreifer, der den Kartenschlüssel unbefugter Weise berechnen will, unmöglich sein, weitere Teile der Schlüsselstromfolge vorherzusagen. Dies impliziert, daß es ebenfalls unmöglich sein muß, auf den Schlüssel zurückzurechnen. Die bisher bekannten rückgekoppelten Schieberegistereinrichtungen gewähren hierfür bereits einen guten Schutz, sofern die Schieberegistereinrichtung hinreichend lang ist, z.B. 50 hintereinander geschaltete Schieberegisterzellen aufweist.

Aus der veröffentlichten Europaïschen Patentanmeldung EP-A-0 616 429 ist bereits ein Verfahren und eine Schaltungsanordnung zum Erzeugen einer Pseudozufallsfolge von Bitdaten unter Verwendung einer rückgekoppelten Schieberegistereinrichtung bekannt, bei der durch mindestens einen Schaltzustand festgelegt wird, ob eine Ausgabe der Bitdaten erfolgt. Es besteht jedoch ein Bestreben dahin, diese bekannten Verfahren mit geringstmöglichen Aufwand noch besser zu sichern. Hier setzt die Erfindung an.

Der Erfindung liegt die Aufgabe zugrunde, ein Verfahren zum Erzeugen einer Pseudozufallsfolge der beschriebenen Art sowie eine Schaltungsanordnung zur Durchführung des Verfahrens anzugeben, das gegenüber dem bisher bekannten Verfahren und der bekannten Schaltungsanordnung eine höhere Sicherheit aufweist und einfach zu realisieren ist. Darüber hinaus soll eine geeignete Verwendung für dieses Verfahren und diese Schaltungsanordnung aufgezeigt werden.

Diese Aufgabe wird für das Verfahren gemäß Anspruch 1 dadurch gelöst, daß das logische Ausgangssignal der nichtlinearen logischen Funktion als Taktsignal einer Zählereinrichtung zugeführt wird und daß bei Erreichen eines vorbestimmten Zählerstandes der Zählereinrichtung ein logisches Signal erzeugt wird, durch das die Bitdaten aus der Schieberegistereinrichtung ausgegeben werden.

Darüber hinaus können die von der Schieberegistereinrichtung ausgegebenen Bitdatendaten in eine Zwischenspeichereinrichtung übernommen werden, aus der der gespeicherte Wert zu festgelegten Zeitpunkten abgerufen wird. Dies kann wiederum durch eine weitere Zählereinrichtung ausgeführt werden, die bei Erreichen eines vorbestimmten Zählerstandes die Ausgabe steuert.

Die Aufgabe wird für die Schaltungsanordnung gemäß Anspruch 4 dadurch gelöst, daß eine rückgekoppelte Schieberegistereinrichtung eine Vielzahl von hintereinander geschalteten Schieberegisterzellen enthält, daß vorgegebene Schieberegisterzellen ausgangsseitig mit einer eine nichtlineare logische Funktion realisierenden Schaltung verbunden sind, daß der Takteingang einer ersten Zählereinrichtung mit einem Ausgang der Schaltung verbunden ist, daß ein Zwischenspeicher eingangsseitig mit mindestens einer der Schieberegisterzellen verbunden ist, daß ein Taktsteuereingang des Zwischenspeichers von einer einen Zählerstand der ersten Zählereinrichtung dekodierenden Logikeinrichtung gesteuert wird, daß eine Schalteinrichtung mit mindestens einem Ausgang des Zwischenspeichers verbunden ist und daß die Schalteinrichtung von einer einen Schaltzustand einer zweiten Zählereinrichtung dekodierenden Logikeinrichtung gesteuert wird.

In einer vorteilhaften Weiterbildung der erfindungsgemäßen Schaltungsanordnung ist vorgesehen, daß das Schieberegister und die zweite Zählereinrichtung mit der gleichen Taktrate gesteuert werden. Die Logikeinrichtungen zur Dekodierung eines jeweils vorbestimmten Zählerstandes können so ausgeführt werden, daß der Überlauf der jeweiligen Zählereinrichtung dekodiert wird. Darüber hinaus kann die Schalteinrichtung ein Logikgatter sein. Vorzugsweise ist die Wortbreite der zweiten Zählereinrichtung mindestens doppelt so groß wie die Wortbreite der ersten Zählereinrichtung zu wählen.

Gemäß der Erfindung wird das Verfahren oder die Schaltungsanordnung zur Verschlüsselung bzw. Entschlüsselung von Daten und/oder in einer Datenträgeranordnung, insbesondere Chipkarten mit integrierten Schaltungsanordnungen, zu deren Echtheitserkennung eingesetzt.

Die Erfindung wird im folgenden anhand eines Ausführungsbeispieles in Zusammenhang mit einer Figur näher erläutert.

Die erfindungsgemäße Schaltungsanordnung sieht eine rückgekoppelte Schieberegistereinrichtung 1 vor. Die Schieberegistereinrichtung 1 enthält eine Vielzahl n von hintereinander geschalteten Schieberegisterzellen. Eine Auswahl von m der n Schieberegisterzellen ist über eine Rückkopplungseinrichtung 2 auf den Dateneingang 3 der Schieberegistereinrichtung 1 rückgekoppelt. Die Rückkopplungseinrichtung 2 führt eine logische Funktion aus. Sie enthält vorzugsweise m-1 Exklusiv-ODER-Schaltglieder mit jeweils zwei Eingangsklemmen und einer Ausgangsklemme. Ein erstes EXOR-Schaltglied ist mit zwei der m rückgekoppelten Schieberegisterzellen verbunden. Die weiteren EXOR-Schaltglieder sind eingangsseitig mit der Ausgangsklemme eines anderen EXOR-Schaltgliedes und einem der rückgekoppelten Schieberegisterzellen verbunden. Das letzte der derart hintereinander geschalteten EXOR-Schaltglieder bildet den Ausgang 4 der Rückkopplungseinrichtung 2. Durch ein weiteres logisches Schaltglied 5, zweckmäßigerweise ein Exklusiv-ODER-Schaltglied, wird ein Eingangssignal E eingekoppelt. Dieses Eingangssignal E kann beispielsweise aus einer Geheiminformation, einer Zufallszahl als Challenge und gegebenenfalls einer Zusatzinformation (z.B. ein Datenspeicherinhalt) gewonnen werden.

Erfindungsgemäß ist mit der Schieberegistereinrichtung ausgangsseitig eine Zwischenspeichereinrichtung 8 verbunden. Die Zwischenspeichereinrichtung 8 hat die Wortbreite 7, die kleiner oder gleich der Wortbreite der Schieberregistereinrichtung 1 sein kann. Ein Takteingang 13 der Zwischenspeichereinrichtung 8 wird von einem Impuls gesteuert, der aus einer Zählereinrichtung 10 unter Dekodierung eines vorbestimmten Zählerstandes erhalten wird. Zweckmäßigerweise wird dieser Impuls beim Überlauf der Zählereinrichtung 10 erzeugt. Die Zählereinrichtung 10 wird von einer eine nichtlineare logische Funktion realisierenden Schaltung 9 taktseitig gesteuert. In der Schaltung 9 werden die logischen Werte von P Schieberegisterzellen verarbeitet. Die nichtlineare logische Funktion der Schaltung 10 setzt sich zweckmäßigerweise aus logischen Schaltgliedern, wie UND- und ODER-Schaltgliedern zusammen. An die Zwischenspeichereinrichtung 8 ist ausgangsseitig eine Schalteinrichtung 11 angeschlossen. Die Schalteinrichtung 11 wird an einem weiterem Eingang 15 von einer einen vorbestimmten Zählerstand einer weiteren Zählereinrichtung 12 dekodierenden Einrichtung gesteuert. Vorzugsweise ist der Steuereingang 15 der Schalteinrichtung 11 mit der Überlaufanzeige des Zählers 12 verbunden. Der Zähler 12 und das Schieberegister 1 werden vom gleichen Taktsignal CLK gesteuert. Vorzugsweise hat die Zählereinrichtung 12 mindestens die doppelte Wortbreite der Zählereinrichtung 10. Bei einer Wortbreite von etwa 32 Bit der Zählereinrichtung 10 hat der Zähler 12 dann zweckmäßigerweise eine Wortbreite von 64 oder 128 Bit.

Die erfindungsgemäße Schaltungsanordnung arbeitet folgendermaßen: Nach einer definierten Voreinstellung des Schieberegisterzustandes wird das Eingangssignal E, welches wie bereits erwähnt aus einer Geheiminformation, einer Zufallszahl oder gegebenenfalls einer Zufallsinformation bestehen kann, in die rückgekoppelte Schieberegistereinrichtung 1 eingegeben. Diese Eingabe wird über die Verknüpfungslogik 5, hier ein EXOR-Schaltglied, mit der Rückkopplungsinformation am Ausgang 4 der Rückkopplungseinrichtung 2 verknüpft. Die Schaltung 9 zur Erzeugung der nichtlinearen Funktion erzeugt datenabhängige Zählimpulse an ihrem Ausgang 14, mit denen die Zählereinrichtung 10 hochgezählt wird. Bei Erreichen eines vorbestimmten Zählerstandes, vorzugsweise des Überlaufs des Zählers 10, wird ein Taktimpuls erzeugt, durch den der Zustand des Schieberegisters 1 zumindest teilweise in den Zwischenspeicher 8 übernommen wird. Die Zählrate der Zählereinrichtung 10 ist somit niedriger als die Taktrate des Schieberegisters 1. Bei jedem weiteren Überlauf des Zählers 10 werden die im Zwischenspeicher 8 enthaltenen Daten durch den neuen Zustand der Schieberegistereinrichtung 1 überschrieben. Der Zähler 10 wird dann rückgesetzt und durchläuft erneut den Zählbereich.

Der Zähler 12 läuft datenunabhängig mit der Taktrate des Schieberegisters 1. Wenn der Zähler 12 den vorbestimmten Zählerstand, vorzugsweise Überlauf, erreicht, wird ein Impuls erzeugt, mit dem die Schalteinrichtung 11 freigegeben wird. Die in der Zwischenspeichereinrichtung 8 gespeicherten Bitdaten werden dann als logisches Ausgangssignal R an den Ausgang 16 der Schalteinrichtung 11 weitergegeben. Es hat sich als zweckmäßig erwiesen, für das Schaltglied 11 ein logisches Schaltglied zu verwenden, mit dem ein Bit der Zwischenspeichereinrichtung 8 an den Ausgang 16 bei jedem Überlauf des Zählers 12 ausgegeben wird. Somit ergibt sich für eine Gesamtwortbreite des Ausgangssignals R von r Bit eine Anzahl von r Rechenläufen. Die gesamte Verarbeitungsdauer wird dann durch den Zählbereichs des Zählers 12 bestimmt.

## Patentansprüche

1. Verfahren zum Erzeugen einer Pseudozufallsfolge von Bitdaten unter Verwendung einer rückgekoppelten Schieberegistereinrichtung (1, 2, 5), wobei Ausgangssignale der Schieberegistereinrichtung (1) einer nichtlinearen logischen Funktion als Eingangsvariable zugeführt werden, und wobei abhängig vom logischen Ausgangssignal der nichtlinearen logischen Funktion eine Ausgabe der Bitdaten durchgeführt wird,
**dadurch gekennzeichnet,**
daß das logische Ausgangssignal der nichtlinearen logischen Funktion als Taktsignal einer Zählereinrichtung (10) zugeführt wird und daß bei Erreichen eines vorbestimmten Zählerstandes der Zählereinrichtung (10) ein logisches Signal erzeugt wird, durch das die Bitdaten aus der Schieberegistereinrichtung (1) ausgegeben werden.

2. Verfahren nach Anspruch 1,
**dadurch gekennzeichnet,** daß die Bitdaten durch das von der Zählereinrichtung (10) erzeugte logische Signal gesteuert in einen Zwischenspeicher (8) übernommen werden und daß zu festgelegten Zeitpunkten mindestens ein im Zwischenspeicher (8) gespeichertes Bitdatum ausgegeben wird.

3. Verfahren nach Anspruch 2,
**dadurch gekennzeichnet,** daß eine weitere Zählereinrichtung (12) mit dem Schieberegistertakt gesteuert wird und daß bei Erreichen eines festgelegten Zählerstandes der weiteren Zählereinrichtung (12) ein logisches Signal erzeugt wird, durch das die Ausgabe aus dem Zwischenspeicher (8) gesteuert wird.

4. Schaltungsanordnung zur Durchführung des Verfahrens nach einem der Ansprüche 1 bis 3, gebildet mit einer rückgekoppelten Schieberegistereinrichtung (1, 2, 5), die eine Vielzahl von hintereinander geschalteten Schieberegisterzellen enthält, wobei vorgegebene Schieberegisterzellen ausgangsseitig mit einer eine nichtlineare logische Funktion realisierenden Schaltung (9) verbunden sind,
**dadurch gekennzeichnet,**
daß der Takteingang einer ersten Zählereinrichtung (10) mit einem Ausgang (14) der Schaltung (9) verbunden ist, daß ein Zwischenspeicher (8) eingangsseitig mit mindestens einer der Schieberegisterzellen verbunden ist, daß ein Taktsteuereingang des Zwischenspeichers (8) von einer einen Zählerstand der ersten Zählereinrichtung (10) dekodierenden Logikeinrichtung gesteuert wird, daß eine Schalteinrichtung (11) mit mindestens einem Ausgang des Zwischenspeichers (8) verbunden ist und daß die Schalteinrichtung (11) von einer einen Schaltzustand einer zweiten Zählereinrichtung (12) dekodierenden Logikeinrichtung gesteuert wird.

5. Schaltungsanordnung nach Anspruch 4,
**dadurch gekennzeichnet,** daß die Taktsignalsteuerungen des Schieberegisters (1) und der zweiten Zählereinrichtung (12) gekoppelt sind.

6. Schaltungsanordnung nach Anspruch 4 oder 5,
**dadurch gekennzeichnet,** daß die mit der ersten und der zweiten Zählereinrichtung (10, 12) verbundenen Logikeinrichtungen jeweils den Überlauf der ersten bzw. zweiten Zählereinrichtung (10 bzw. 12) dekodieren.

7. Schaltungsanordnung nach einem der Ansprüche 4 bis 6,
**dadurch gekennzeichnet,** daß die Schalteinrichtung (11) ein Logikgatter ist.

8. Schaltungsanordnung nach einem der Ansprüche 4 bis 7,
**dadurch gekennzeichnet,** daß die Wortbreite der zweiten Zählereinrichtung (12) mindestens das Zweifache der Wortbreite der ersten Zählereinrichtung (10) ist.

9. Verwendung des Verfahrens nach einem der Ansprüche 1 bis 3 oder der Schaltungsanordnung nach einem der Ansprüche 4 bis 8 in einer Datenträgeranordnung, insbesondere einer Chipkarte mit einer integrierten Schaltungsanordnung, zur Echtheitserkennung.

10. Verwendung des Verfahrens nach einem der Ansprüche 1 bis 3 oder der Schaltungsanordnung nach einem der Ansprüche 4 bis 8 zum Verschlüsseln und/oder Entschlüsseln von Daten.

## Claims

1. Method for generating a pseudo-random sequence of bit data using a feedback shift register device (1, 2, 5), output signals of the shift register device (1) being fed as input variable to a non-linear logical function, and outputting of the bit data being carried out in a manner dependent on the logical output signal of the non-linear logical function,
characterized
in that the logical output signal of the non-linear logical function is fed as clock signal to a counter device (10), and in that when a predetermined counter reading of the counter device (10) is reached, a logical signal is generated which results in the outputting of the bit data from the shift register device (1).

2. Method according to Claim 1,
characterized in that the bit data, under the control of the logical signal generated by the counter device (10), are accepted into a buffer store (8), and in that at least one bit datum stored in the buffer store (8) is output at defined instants.

3. Method according to Claim 2,
characterized in that a further counter device (12) is controlled by the shift register clock, and in that when a defined counter reading of the further counter device (12) is reached, a logical signal is generated by means of which the outputting from the buffer store (8) is controlled.

4. Circuit arrangement for carrying out the method according to one of Claims 1 to 3, formed by a feedback shift register device (1, 2, 5) which contains a multiplicity of cascaded shift register cells, predetermined shift register cells being connected, on the output side, to a circuit (9) which realizes a non-linear logical function,
characterized
in that the clock input of a first counter device (10) is connected to an output (14) of the circuit (9), in that a buffer store (8) is connected, on the input side, to at least one of the shift register cells, in that a clock control input of the buffer store (8) is controlled by a logic device which decodes a counter reading of the first counter device (10), in that a switching device (11) is connected to at least one output of the buffer store (8), and in that the switching device (11) is controlled by a logic device which decodes a switching state of a second counter device (12).

5. Circuit arrangement according to Claim 4,
characterized in that the clock signal controls of the shift register (1) and of the second counter device (12) are coupled.

6. Circuit arrangement according to Claim 4 or 5,
characterized in that the logic devices connected to the first and second counter devices (10, 12) in each case decode the overflow of the first and second counter device (10 and 12, respectively).

7. Circuit arrangement according to one of Claims 4 to 6,
characterized in that the switching device (11) is a logic gate.

8. Circuit arrangement according to one of Claims 4 to 7,
characterized in that the word width of the second counter device (12) is at least twice the word width of the first counter device (10).

9. Use of the method according to one of Claims 1 to 3 or of the circuit arrangement according to one of Claims 4 to 8 in a data carrier arrangement, in particular a smart card with an integrated circuit arrangement, for identifying authenticity.

10. Use of the method according to one of Claims 1 to 3 or of the circuit arrangement according to one of Claims 4 to 8 for the encryption and/or decryption of data.

## Revendications

1. Procédé pour obtenir une séquence pseudo-aléatoire d'informations binaires grâce à l'utilisation d'un registre à décalage (1, 2, 5) à rétroaction, des signaux de sortie dudit registre à décalage (1) étant amenés en tant que variable d'entrée à une fonction logique non linéaire, et une sortie des informations binaires étant effectuée en fonction du signal de sortie logique de la fonction logique non linéaire, caractérisé en ce que le signal de sortie logique de la fonction logique non linéaire est amené en tant que signal d'horloge à un dispositif compteur (10) et en ce qu'un signal logique est généré lorsqu'un état de compteur prédéfini dudit dispositif compteur (10) est atteint, grâce auquel les informations binaires sont délivrées par le registre à décalage (1).

2. Procédé selon la revendication 1, caractérisé en ce que les informations binaires, par le signal logique généré par le dispositif compteur (10), sont prises en charge de manière contrôlée dans une mémoire tampon (8) et en ce qu'à des instants déterminés, au moins une donnée binaire stockée dans la mémoire tampon (8) est délivrée.

3. Procédé selon la revendication 2, caractérisé en ce qu'un autre dispositif compteur (12) est commandé par l'horloge du registre à décalage et en ce qu'un signal logique est généré lorsqu'un état de compteur prédéfini de l'autre dispositif compteur (12) est atteint, grâce auquel la sortie de la mémoire tampon (8) est commandée.

4. Circuit pour la mise en oeuvre du procédé selon l'une des revendications 1 à 3, formé avec un registre à décalage (1, 2, 5) à rétroaction, qui contient une pluralité de cellules de registre à décalage montées en série, des cellules de registre à décalage prédéfinies étant reliées, côté sortie, à un circuit (9) réalisant une fonction logique non linéaire, caractérisé en ce que l'entrée d'horloge d'un premier dispositif compteur (10) est reliée à une sortie (14) du circuit (9), en ce qu'une mémoire tampon (8) est reliée, côté entrée, à au moins une des cellules de registre à décalage, en ce qu'une entrée de commande d'horloge de la mémoire tampon (8) est commandée par un dispositif logique décodant un état de compteur du premier dispositif compteur (10), en ce qu'un dispositif de commutation (11) est relié à au moins une sortie de la mémoire tampon (8) et en ce que le dispositif de commutation (11) est commandé par un dispositif logique décodant un état de commutation d'un deuxième dispositif compteur (12).

5. Circuit selon la revendication 4, caractérisé en ce que les commandes de signal d'horloge du registre à décalage (1) et du deuxième dispositif compteur (12) sont couplées.

6. Dispositif selon la revendication 4 ou 5, caractérisé en ce que les dispositifs logiques reliés au premier et au deuxième dispositif compteur (10, 12) décodent à chaque fois le dépassement du premier resp. du deuxième dispositif compteur (10 resp. 12).

7. Circuit selon l'une des revendications 4 à 6, caractérisé en ce que le dispositif de commutation (11) est une porte logique.

8. Circuit selon l'une des revendications 4 à 7, caractérisé en ce que la largeur de mot du deuxième dispositif compteur (12) représente au moins le double de la largeur de mot du premier dispositif compteur (10).

9. Utilisation du procédé selon l'une des revendications 1 à 3 ou du circuit selon l'une des revendications 4 à 8 dans un support de données, en particulier une carte à puce à circuit intégré, pour l'authentification.

10. Utilisation du procédé selon l'une des revendications 1 à 3 ou du circuit selon l'une des revendications 4 à 8 pour le codage et/ou le décodage de données.
